# EUROPEAN PATENT APPLICATION

(11) **EP 2 505 908 A1**
(43) Date of publication of application: **03.10.2012**
(21) Application number: 10843144.6
(22) Date of filing: 07.12.2010
(51) Int. Cl.: F21S 2/00, F21Y 101/02

(54) **LIGHTING DEVICE, DISPLAY APPARATUS, AND TELEVISION RECEIVER APPARATUS**

(30) Priority: 18.01.2010 JP 2010008262
(71) Applicant: Sharp Kabushiki Kaisha, Osaka-shi, Osaka 545-8522 (JP)
(72) Inventor: KASAI, Nobuhiro, Osaka-shi, Osaka 545-8522 (JP)
(74) Representative: Müller-Boré & Partner Patentanwälte
(86) International application number: PCT/JP2010/071882
(87) International publication number: WO 2011/086789

(57) **Abstract**

Uneven brightness is less likely to occur in lighting devices. A lighting device includes a light source unit U, light guide blocks 31 to 35, a chassis 60, and positioning portions S. The light source unit U includes a plurality sets of light sources P arranged along a centerline Lc. Each set of light sources P is a pair of LEDs 45 disposed so as to be equally distanced from the centerline Lc and face each other. The light guide blocks 31 to 35, each provided corresponding to each one of the sets of light sources P, are disposed between the set of light sources P. The light sources have two end surfaces E in a longitudinal direction that face the LEDs 45. The chassis 60 houses the light source unit U and the light guide blocks 31 to 35. The positioning portions S position a middle portion of the respective light guide blocks 31 to 35 in the longitudinal direction on the centerline Lc.

## Description

### TECHNICAL FIELD

The present invention relates to a lighting device, a display device, and a television receiver.

### BACKGROUND ART

In display devices such as liquid crystal panels displaying moving images, a phenomenon known as streaking sometimes occurs. Patent Document 1 listed below discloses a technique for reducing streaking of images by backlight scanning, in which sections of light sources are turned on in synchronism with the image writing on the liquid crystal panel side. Since light sources forming respective channels need a light guide plate for performing backlight scanning, the light guide plate is divided into a plurality of blocks.

Patent Document 1: Japanese Unexamined Patent Publication No. 2001-92370

### Problem to be Solved by the Invention

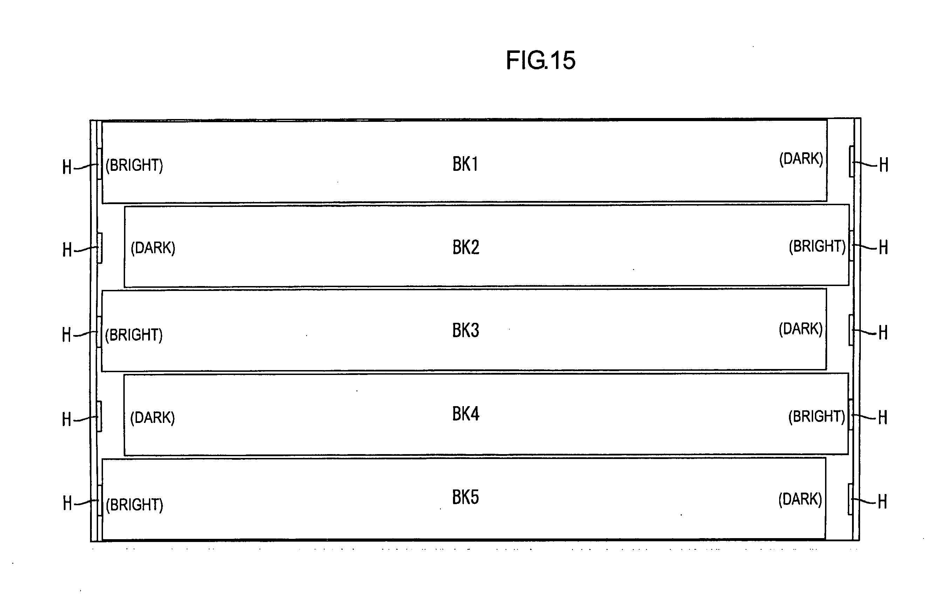

Thermal shrinkage may be caused in the respective blocks forming the light guide plate by the heat generated by the light sources, and this requires gaps to be provided between the light sources and the blocks. However, the gaps may cause variations in the positions of the respective blocks BK. As shown in FIG. 15, some blocks BK1, BK3, and BK5 may be arranged closer to the left side in the drawing and other blocks BK2 and BK4 may be arranged closer to the right side in the drawing. In portions where the blocks BK (BK1, BK3, and BK5) are arranged closer to the left side, the left side that is closer to the light sources H will be brighter, and the right side away from the light sources H will be darker. Contrary to the above, in portions where the blocks BK (BK2 and BK4) are arranged closer to the right side, the right side that is closer to the light sources H will be brighter, and the left side away from the light sources H will be darker. There will thus be variations in brightness among the respective blocks BK1 to BK5, resulting in uneven brightness. Such uneven brightness (unevenness caused by inconsistencies in brightness on the left and right side) can occur also in configurations with an undivided light guide plate.

### DISCLOSURE OF THE PRESENT INVENTION

The present invention was made in view of the foregoing circumstances, its object being to reduce uneven brightness in lighting devices.

### Means for Solving the Problem

The lighting device (first lighting device) of the present technology includes a light source unit, a plurality of light guide members, a housing member, and a positioning portion. The light source unit includes a plurality sets of light sources arranged along a centerline. Each of the light source sets includes a set of point light sources disposed so as to be equally distanced from the centerline and face each other. The plurality of light guide members are provided between the set of light sources and each of the light guide members is provided corresponding to each set of the light sources. Each of the light guide members has both end surfaces in a longitudinal direction and the end surfaces face the corresponding point light sources. The housing member houses the light source unit and the plurality of light guide members. The positioning portion is configured to position each of the light guide members such that a middle portion of the light guide member in the longitudinal direction corresponds to the centerline.

The lighting device described above is configured to have the middle portions in the longitudinal direction of the light guide members positioned on the centerline corresponding to the midpoints of the light source pairs. Therefore, the distances from the point light sources to the end surfaces of the light guide members are equal on the left and right side. Thermal shrinkage is caused in the light guide members due to the heat generated from the light sources, and thermal shrinkage is caused equally on the left and right side with respect to the middle portions that are fixed in position. Thus, the distances from the light sources to the end surfaces stay equal on the left and right side and remain the same. Therefore, the respective light guide members exit light evenly on the left and right side with respect to the centerline when the light sources are turned on. Consequently, there will be no uneven brightness.

The following configurations are preferable as embodiments of the lighting device (first lighting device) of the present invention.
The positioning portion may include a protrusion provided to one of the housing member and the light guide members and a receiving portion provided to another one of the housing member and the light guide members to mate with the protrusion. In this way, the light guide members can be positioned only by fitting the protrusion in the receiving portion. Therefore, the positioning work can be performed easily without much time and effort. As the number of components is not increased, there is also a cost advantage.

The positioning portion may be provided in the middle portion of the light guide members so as not to overlap the light sources in a plane along a line connecting the corresponding set of light sources. In such a configuration, the positioning portion is located away from the light axis. The light reflection is significantly affected by provision of the positioning portion as compared to the case where it is not provided. If the positioning portion is provided on the light axis, non-negligible effects may be caused on the lighting performance, but there is no such worry with this configuration.

The lighting device (second lighting device) of the present technology includes a light source unit, a single light guide plate, a housing member, and a positioning portion. The light source unit includes sets of light sources arranged along a centerline. Each of the light source sets includes a set of light sources disposed so as to be equally distanced from the centerline and face each other. The single light guide plate is disposed between the set of light sources and has both end surfaces in a longitudinal direction and the end surfaces face the light sources. The housing member houses the light source unit and the light guide plate. The positioning portion is configured to position the light guide plate such that a middle portion of the light guide plate in the longitudinal direction corresponds to the centerline.

The lighting device described above is configured to have the middle portion in the longitudinal direction of the light guide plate positioned on the centerline corresponding to the midpoint of the set of light sources. Therefore, the distances from the light sources to the end surfaces of the light guide plate are equal on the left and right side. Thermal shrinkage is caused in the light guide plate due to the heat generated from the light sources. The thermal shrinkage is caused equally on the left and right side with respect to the middle portion that is fixed in position. Thus, the distances from the light sources to the end surfaces stay equal on the left and right side and remain the same. Therefore, the light guide plate exits light evenly on the left and right side about the centerline when the light sources are turned on. Consequently, there will be no uneven brightness.

The following configurations are preferable as embodiments of the lighting device (second lighting device) of the present invention.
The positioning portion may include a protrusion provided to one of the housing member and the light guide plate and a receiving portion provided to another one of the housing member and the light guide plate to mate with the protrusion. In this way, the light guide plate can be positioned only by fitting the protrusion in the receiving portion. Therefore, the positioning work can be performed easily without much time and effort. As the number of components is not increased, there is also a cost advantage.

The positioning portion may be located in the middle portion of the light guide plate and outside a display region of the liquid crystal display panel. In such a configuration, the positioning portion can be located outside the display region. Therefore, it will hardly affect the display performance.

The following configurations are preferable as embodiments of both lighting devices (first and second lighting devices) of the present invention.

The light source unit may be a point light source array having a board extending parallel to the centerline and the point light sources forming the sets of light sources arrayed thereon in a row. In this way, assembling can be performed efficiently, as the plurality of point light sources can be assembled collectively to the housing member.

The point light source array may be attached to the housing member. In this way, since both of the point light source array and the light guide members (or light guide plate) are attached to the same member (housing member), the point light source array and the light guide members (or light guide plate) can be positioned relative to each other highly precisely.

The lighting device may further include a reflection member provided on the board and reflecting light of the point light sources. In this way, light emitted from the point light sources can be made incident on the light guide members more efficiently. The reflection member may preferably be a reflection sheet (such as a PET foam reflection sheet or a multilayer reflection sheet), or formed of a light reflecting resist.

The point light sources may be white light emitting diodes. There will then be the advantages of longer life of point light sources and lower power consumption.

The white light emitting diode may include a light emitting chip emitting blue light, and a fluorescent layer formed around the light emitting chip and having a light emission peak in a range of yellow. In this way, the white light emitting diode can be configured as one chip. The white light emitting diode may include a light emitting chip emitting blue light, and a fluorescent layer formed around the light emitting chip and having a light emission peak each in ranges of green and red. Alternatively, the white light emitting diode may include a light emitting chip emitting blue light, a fluorescent layer formed around the light emitting chip and having a light emission peak in a range of green, and a light emitting chip emitting red light.

The white light emitting diode may include a light emitting chip emitting blue light, a light emitting chip emitting green light, and a light emitting chip emitting red light. With this configuration, as the colors are equalized as a whole, illumination light with a substantially uniform color tone can be achieved.

The white light emitting diode may include a light emitting chip emitting UV light, and a fluorescent layer formed around the light emitting chip, in which case the fluorescent layer may preferably have a light emission peak each in the ranges of blue, green, and red. In this way, as the colors are equalized as a whole, illumination light with a substantially uniform color tone can be achieved.

The display device of the present technology includes the lighting device described above, and a liquid crystal display panel displaying images using light from the lighting device. Further, the television receiver of the present invention includes the display device. Such display device can be applied to TV or PC displays and is particularly suited for use as large screen displays.

### Advantageous Effect of the Invention

According to the present invention, a lighting device having no uneven brightness can be provided. Further, a display device, and a television receiver using this lighting device can be provided.

### BRIEF DESCRIPTION OF THE DRAWINGS

FIG. 1 is an exploded perspective view illustrating a schematic configuration of a television receiver according to a first embodiment of the present invention;
FIG. 2 is an exploded perspective view illustrating a schematic configuration of a display device provided in the television receiver;
FIG. 3 is a plan view of a lighting device illustrating the positional relationship between LED arrays and light guide blocks;
FIG. 4 is a cross-sectional view illustrating the structure of an LED (light emitting diode);
FIG. 5 is a cross-sectional view illustrating the structure of an LED (light emitting diode);
FIG. 6 is a cross-sectional view illustrating the structure of an LED (light emitting diode);
FIG. 7 is a perspective view of an LED array;
FIG. 8 is a cross-sectional view cut along the centerline Lc of FIG. 3;
FIG. 9 is a horizontally cut cross-sectional view of the display device;
FIG. 10 is a cross-sectional view illustrating the structure of positioning portions according to a second embodiment of the present invention;
FIG. 11 is an exploded perspective view illustrating a schematic configuration of a display device according to a third embodiment of the present invention;
FIG. 12 is a plan view of a lighting device illustrating the positional relationship between LED arrays and a light guide block;
FIG. 13 is a cross-sectional view cut along the centerline Lc of FIG. 12;
FIG. 14 is a plan view illustrating a modified example of a light source unit; and
FIG. 15 is a plan view illustrating a structure of a conventional lighting device.

### BEST MODE FOR CARRYING OUT THE INVENTION

### <First embodiment>

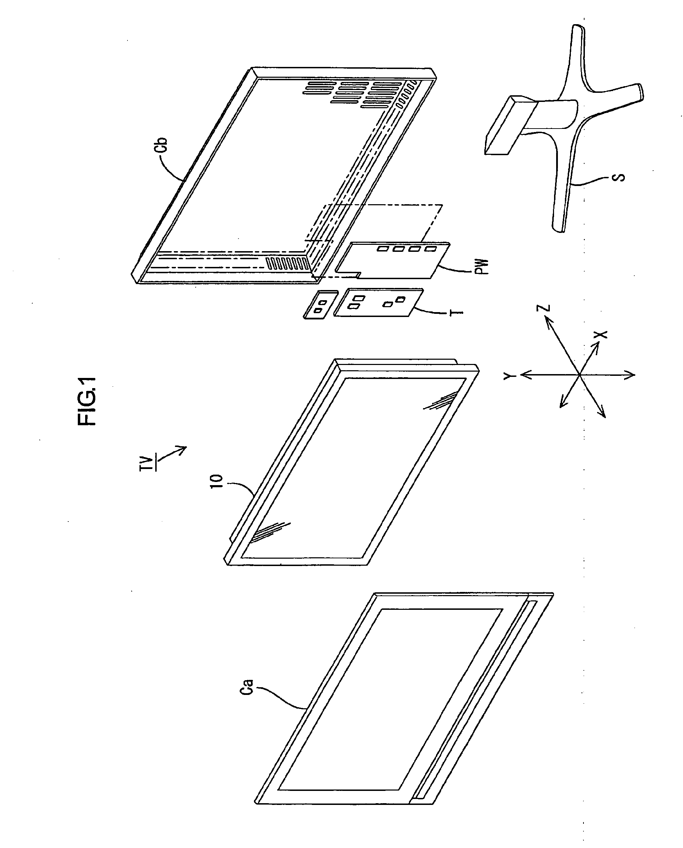

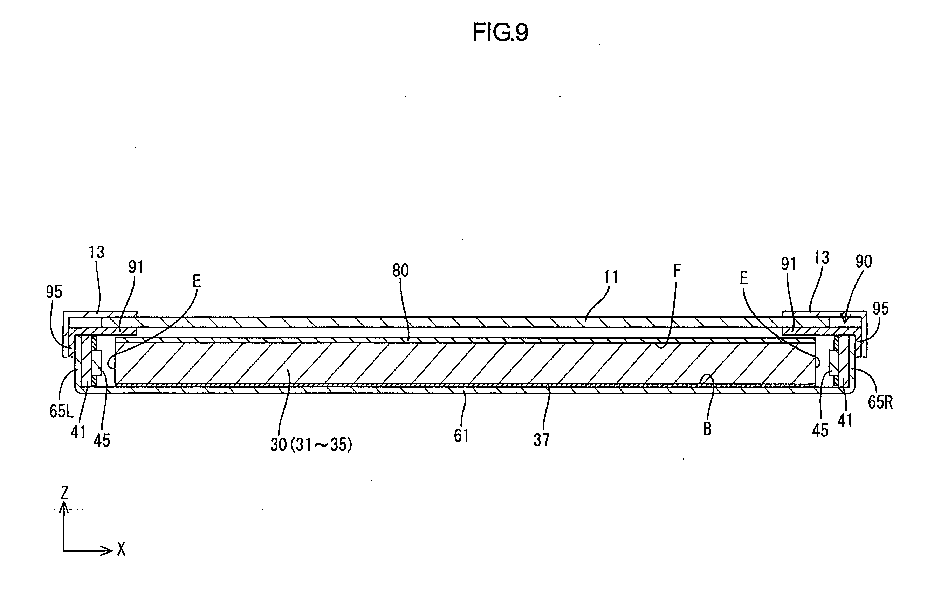

A first embodiment of the present invention will be described with reference to FIGS. 1 to 9. A television receiver TV according to this embodiment includes the display device 10, front and rear cabinets Ca and Cb housing, such as to sandwich, the display device 10, a power source PW, a tuner T, and a stand S, as shown in FIG. 1.

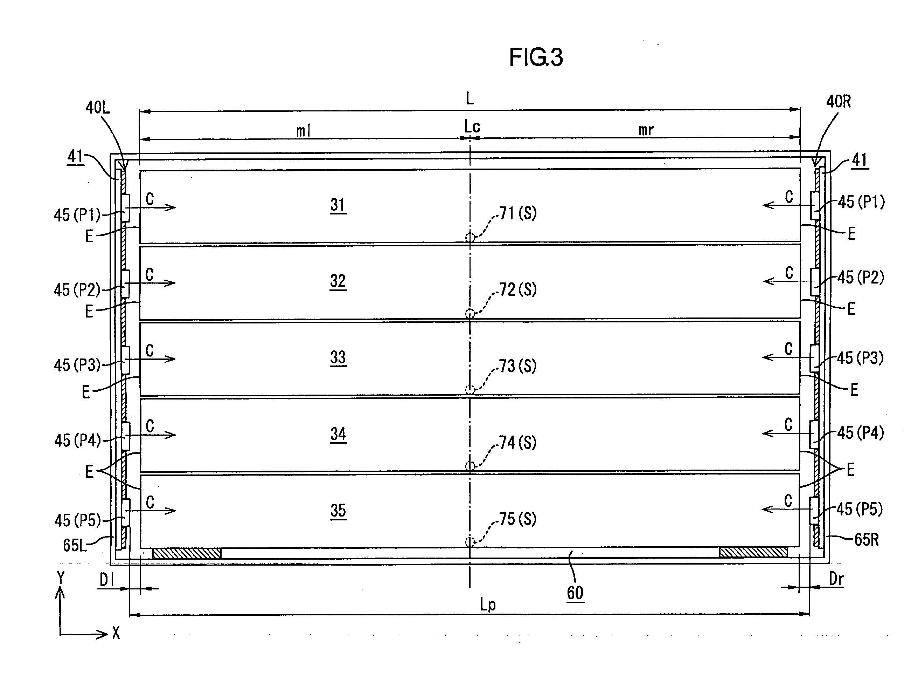

The display device 10 has a horizontally long rectangular shape as a whole, and includes a liquid crystal panel 11 that is the display panel and a lighting device 21 that is an external light source. In the following description, the width direction (longitudinal direction) of the display device 10 will be referred to as an X direction, the height direction (short side direction) of the display device 10 will be referred to as a Y direction, and the depth direction of the display device 10 will be referred to as a Z direction. The centerline Lc refers to a straight line passing through the center in the X direction of the liquid crystal display panel 11 and extending along the Y direction (FIG. 3).

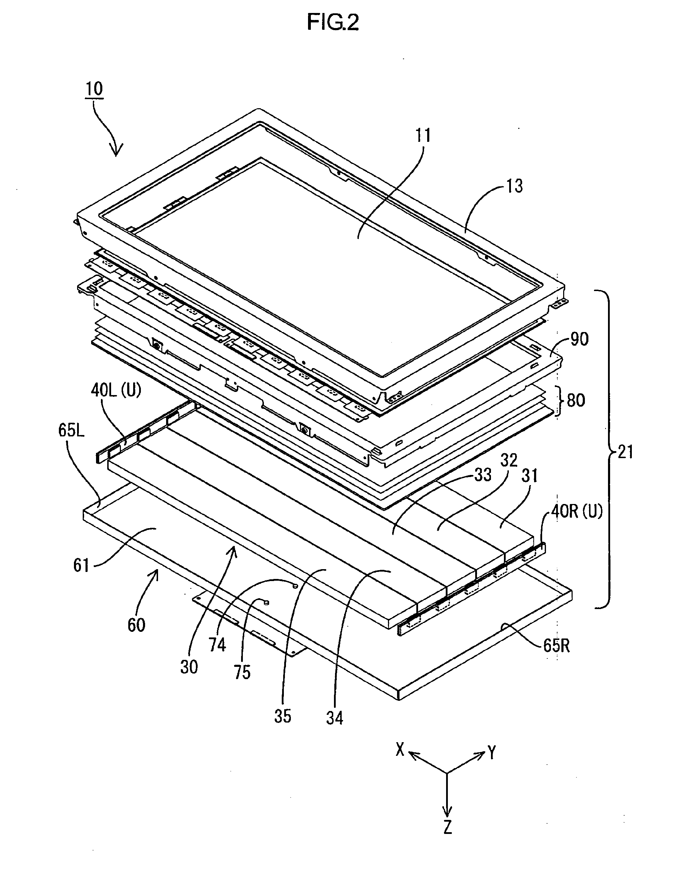

The liquid crystal panel 11 has a horizontally long rectangular shape as shown in FIG. 2. The liquid crystal panel 11 is made of a pair of glass substrates spaced apart a certain distance and bonded together, with liquid crystal sealed in between both glass substrates. One glass substrate includes switching components (such as TFTs) connected to source lines and gate lines orthogonal to each other, pixel electrodes connected to these switching components, and an alignment film, etc. The other glass substrate includes a color filter with respective color sections such as R (red), G (green), and B (blue) arrayed in a predetermined arrangement, counter electrodes, and an alignment film, etc. Both substrates have a polarizing plate on their outer side.

The lighting device 21 includes a light guide plate 30, LED arrays (one example of a "point light source array" of the present invention) 40R and 40L forming a light source unit U, an optical sheet 80, a chassis (one example of a "housing member" of the present invention) 60 housing these, and a holder member 90 as shown in FIG. 2.

The chassis 60 is made of metal and has a horizontally long rectangular shape symmetrical about the centerline Lc. The chassis 60 is formed by a bottom plate 61 and side plates 65 standing up from the respective outer edges of the bottom plate 61 so as to have a shallow box-like shape open toward the front side that is the display surface side (see FIG. 3).

Of the side plates 65 of the chassis 60, side plates 65R and 65L on both sides in the X direction form mounting surfaces, and the LED arrays 40R and 40L are mounted to the respective inner walls of the side plates 65R and 65L with their light emitting surfaces facing inward.

More specifically, the LED arrays 40R and 40L are each formed by a board 41 and LEDs (one example of "point light sources" of the present invention) 45 mounted on the board 41. The board 41 is made of metal such as the same aluminum material as that of the chassis 60, and formed with a wiring pattern (not shown) made of a metal film such as copper foil on the surface thereof via an insulating layer.

The board 41 extends parallel to the centerline Lc shown in FIG. 3, carrying a plurality of (five in this example) LEDs (Light Emitting Diodes) 45 arrayed at regular intervals in a row on the surface thereof.

The LED arrays 40R and 40L are disposed at the position equally distanced from the centerline Lc as shown in FIG. 3. The respective LEDs 45 mounted on the LED arrays 40R so as to face each other and 40L each of the LEDs 45 emits light having a light axis. Therefore, two each LEDs 45 facing each other on left and right form a light source pair P. Namely, in this case, five pairs of LEDs 45 facing each other form five light source pairs P1 to P5.

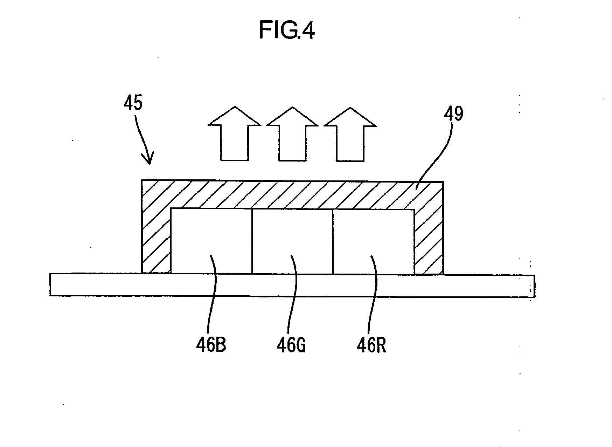

Each LED 45 is quadrate as viewed in plan view and formed by three sets of light emitting chips 46B, 46G, and 46R emitting light of blue, green, and red, arranged side by side, and sealed with a transparent resin 49, as shown in FIG. 4. Such LED 45 emits white light when the three sets of light emitting chips 46B, 46G, and 46R are turned on at the same time by mixture of three colors.

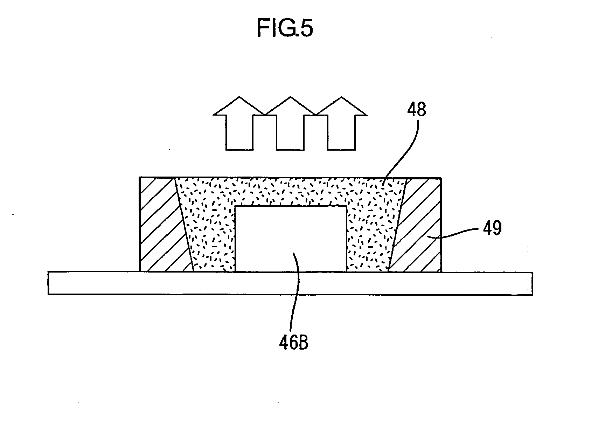

Alternatively, the LED 45 may be configured, other than the above, with a light emitting chip 46B emitting blue light and a phosphor layer 48 formed around and covering the light emitting chip 46B. The phosphor layer 48 is formed by, for example, a transparent resin or binder and fluorescent particles dispersed therein, and has a light emission peak in a region of yellow complementary to blue. The phosphor layer 48 emits yellow light when the fluorescent particles are excited by the light emitted by the light emitting chip 46B. Thus, the LED 45 emits white light by mixture of blue and yellow (see FIG. 5).

Alternatively, the LED 45 may be configured with a light emitting chip 46B emitting blue light and the following phosphor layer 48 formed therearound. The phosphor layer 48 is formed by a transparent resin or binder containing fluorescent particles, and has a light emission peak each in regions of green and red. With this configuration, the LED 45 emits white light by mixture of the respective colors (blue, green, and red) (see FIG. 5).

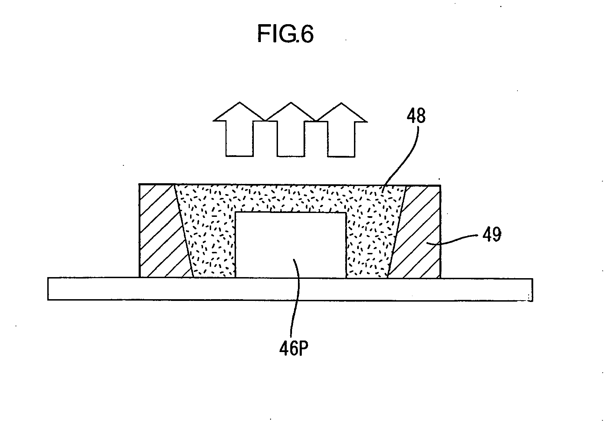

As yet another alternative, the LED 45 may be configured with a light emitting chip 46P emitting UV light and a phosphor layer 48 formed around and covering the light emitting chip 46P (see FIG. 6). The phosphor layer 48 is formed by a transparent resin or binder containing fluorescent particles, and has a light emission peak each in regions of blue, green, and red. With this configuration, light emitted by the light emitting chip 46P excites the fluorescent particles and the phosphor layer 48 emits light of three colors, blue, green, and red. Thus, the LED 45 emits white light by mixture of these three colors.

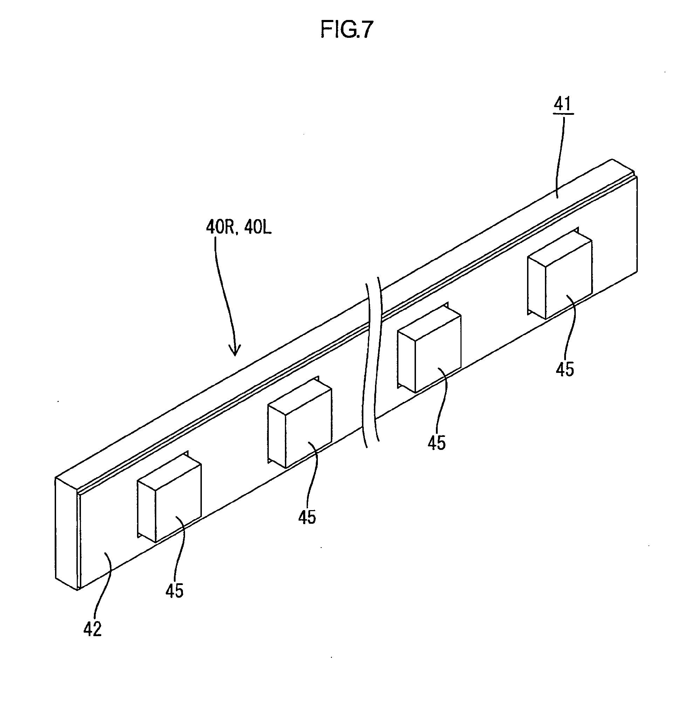

A reflection sheet 42 (one example of a "reflection member" of the present invention) is disposed on the surface of the board 41, as shown in FIG. 7. The reflection sheet 42 extends over the entire length in the longitudinal direction of the board 41 and is formed to continuously cover the regions except for the mounting positions of LEDs 45 on the board surface. This reflection sheet 42 provides a function of reflecting light emitted from the LEDs 45 toward the light guide plate 30 to be described next.

For the reflection sheet 42, a PET foam reflection sheet or a multilayer reflection sheet may be used. A PET foam reflection sheet is a reflection sheet made of white PET foam (polyethylene terephthalate) as the resin base member. A multilayer reflection sheet, or ESR (Enhanced Specular Reflector), is a reflection sheet having high reflectance in the visible light range by a multilayer structure using a polyester resin.

Next, the light guide plate 30 is disposed in a central part of the bottom plate 61 of the chassis 60 that forms a flat surface, with the front side F which is the light exit surface facing upward. The light guide plate 30 guides light entering therein toward the front side F that is the light exit surface. The light guide plate 30 is divided into five light guide blocks (one example of "light guide members" of the present invention) 31 to 35, corresponding to five light source pairs P. The respective light guide blocks 31 to 35 are made of a highly transparent resin (such as acrylic resin). The respective light guide blocks 31 to 35 have a square columnar shape extending in the direction parallel to the light of the light axis C and have a reflection sheet 37 each provided on the backside B thereof.

The five light guide blocks 31 to 35 have the same shape (and overall length). Their overall length is set shorter than the face-to-face distance Lp between LEDs (see FIG. 3). Each of the light guide blocks 31 to 35 is arranged horizontally between each light source pair P with its axis aligned with the light axis C. The left and right end faces (light incident surfaces) E face the left and right LEDs 45 forming the light source pairs P, respectively.

The respective light guide blocks 31 to 35 are configured such that their central portions in the longitudinal direction are positioned on the centerline Lc by positioning portions S to be described next. More specifically, five protrusions 71 to 75 are provided in a row along the centerline Lc that corresponds to the midpoints of the light source pairs P on the bottom plate 61 of the chassis 60. These five protrusions 71 to 75 are columnar and protrude toward the light guide blocks 31 to 35. The protrusions 71 to 75 may either be integrally formed on the bottom plate 61 of the chassis 60, or separate parts.

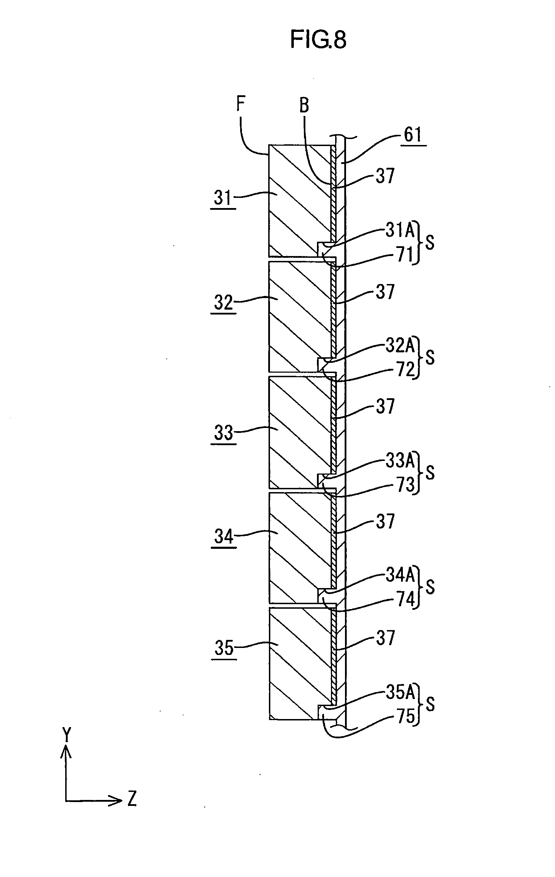

On the other hand, the light guide blocks 31 to 35 have corresponding receiving portions 31A to 35A in their backside B in the central portions in the longitudinal direction for mating with the protrusions 71 to 75. The receiving portions 31A to 35A are configured as circular depressions corresponding to the shape of the protrusions 71 to 75. Thus, the protrusions 71 to 75 snugly fit therein (see FIG. 8).

Thus, with the protrusions 71 to 75 fitted in the receiving portions 31A to 35A, the central portions in the longitudinal direction of the light guide blocks 31 to 35 are positioned on the centerline Lc. Thus, the lengths mr and ml on the left and right about the centerline Lc are equal as shown in FIG. 3. Accordingly, the distance (gap) Dr from the end faces E on the right side of the light guide blocks 31 to 35 to the LEDs 45 is equal to the distance (gap) Dl from the end faces E on the left side of the light guide blocks to the LEDs 45.

Since the five light guide blocks 31 to 35 have the same overall length, the distance Dr and the distance Dl to LEDs 45 are equal with respect to all the light guide blocks 31 to 35. The reason why gaps are provided between the LEDs 45 and the end faces E of the light guide blocks 31 to 35 is to allow for thermal shrinkage of the light guide blocks 31 to 35. The distances Dr and Dl between the LEDs 45 and the end faces E are set such that there is a predetermined distance therebetween when the overall length of the light guide blocks 31 to 35 is maximum.

Next, the positional relationship in the Y direction between the positioning portions S and the LEDs 45 will be described. The positioning portions S are located at the lower edge of the light guide blocks 31 to 35 as shown in FIGs. 3 and 8 to be away from the portion facing the LEDs 45. In other words, the positioning portions S are provided to be away from the lines connecting the left and right LEDs 45, 45 forming respective light source pairs P sandwiching respective light guide blocks 31 to 35.

Note that, while the light guide blocks 31 to 35 are illustrated with gaps therebetween in FIG. 3 to make it clear that the respective light guide blocks 31 to 35 are separate from each other, the light guide blocks 31 to 35 are substantially in tight contact with each other.

With reference to FIG. 2 again, the optical sheet 80 is a thin sheet and has a horizontally long rectangular shape similarly to the liquid crystal panel 11. The optical sheet 80 may be suitably selected from applicable types including, for example, a diffuser sheet, a lens sheet, a reflection type polarizing sheet or the like. The optical sheet 80 is superposed on the front side F of the light guide plate 30 to cover the entire surface of the front side F of the light guide plate 30.

Next, the holder member 90 is formed in a frame shape extending along the outer circumferential edges of the light guide plate 30 as shown in FIG. 2. The holder member 90 is made of a synthetic resin (of a highly light blocking black based color) and has an L-shaped cross section. The holder member 90 is attached to cover the chassis 60, with side walls 95 of the holder member 90 fitting over the outer side of the side plates 65 of the chassis 60, and front walls 91 overlapping the outer circumferential edges of the light guide blocks 31 to 35 forming the light guide plate 30. Thereby the position of the light guide blocks 31 to 35 can be controlled in the depth direction (Z direction).

The liquid crystal panel 11 is disposed on the front side of the holder member 90 such that its outer circumferential edges are overlapped on the front walls 91. Since a frame-like bezel 13 is attached from the front side of the liquid crystal panel 11, the liquid crystal panel 11 is integrally held on the lighting device 21.

The lighting device 21 is configured to control the lighting of the light source pairs P in synchronism with the writing of images (writing of images to pixels) on the liquid crystal panel 11 side in a manner known as backlight scanning. When a light source pair P corresponding to an image writing position is turned on (more specifically, when the left and right LEDs 45 forming the light source pair P are simultaneously turned on), the light enters the end faces E of the corresponding light guide block 31 to 35, and scatters as it propagates through the light guide block 30. This light is reflected by the reflection sheet 37 on the backside B of the light guide block 30 toward the front side F which is the light exit surface.

The front side F of one of the light guide blocks 31 to 35 located at a position corresponding to the image writing position thus exits light intensively and lights the liquid crystal panel 11 (more specifically, the image writing position) from the backside. On the other hand, the light is not turned on in other sections, and the light source pairs P remain to be turned off. Streaking of images can thereby be reduced. Therefore, the image quality can be improved.

Next, the advantageous effect will be described. In this display device 10, the light guide blocks 31 to 35 are set such that their central portions in the longitudinal direction are positioned on the centerline Lc. Therefore, the distances Dr and Dl from the LEDs 45 to the end faces E of the light guide blocks 31 to 35 are equal on the left and right side. Thermal shrinkage may be caused in the light guide blocks 31 to 35 due to the heat generated by the LEDs 45. Thermal shrinkage is caused equally on the left and right side with respect to their central portions that are fixed in position. Thus, the distances Dr and Dl from the LEDs 45 to the end faces E are kept to be equal on the left and right side and are always constant. Therefore, the light guide blocks 31 to 35 exit light evenly on the left and right side with respect to the centerline Lc when the LEDs 45 are turned on. Consequently, there will be no uneven brightness.

In this display device 10, the LED arrays 40R and 40L and the light guide blocks 31 to 35 are both attached to the same member (chassis 60 as a housing member). Accordingly, the LED arrays 40R and 40L and the light guide blocks 31 to 35 can be positioned relative to each other highly precisely. There can hardly be errors in the distances Dr and Dl in such a configuration, which makes any uneven brightness even more unlikely to occur.

In this display device 10, the positioning portions S are provided at the lower edge of the light guide blocks 31 to 35 so as to be away from the portion facing the LEDs 45. The positioning portions S are located away from the light axes C in such a configuration. The light reflection is significantly affected by provision of positioning portions S as compared to the case where they are not provided. If these positioning portions S are provided on the light axes C, they may cause non-negligible effects on the lighting performance, but there is no such worry with this configuration.

In this display device 10, the positioning portions are formed by protrusions 71 to 75 and receiving portions 31A to 35A, which are simply fitted to each other to determine the positions of the light guide blocks 31 to 35. Thus, the positioning work can be performed easily without much time and effort. As the number of components is not increased, there is also a cost advantage.

This display device 10 uses LEDs (Light Emitting Diodes) as the light sources. There are thus the advantages of longer life of light sources and lower power consumption. In this display device 10, the reflection sheet 42 is provided on the respective boards 41 forming the LED arrays 40R and 40L. Therefore, light emitted from the LEDs 45 can be made incident on the light guide blocks 31 to 35 more efficiently.

### <Second embodiment>

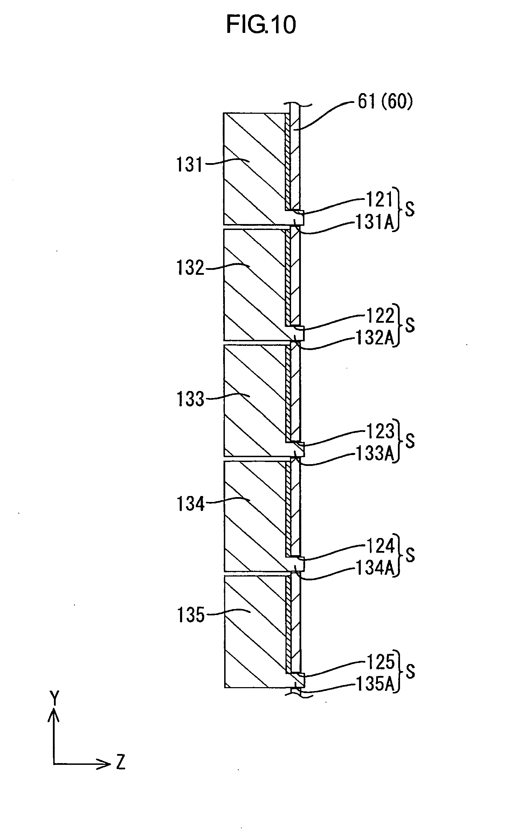

Next, A second embodiment of the present invention will be described with reference to FIG. 10. The positioning portions S illustrated in the first embodiment are formed by protrusions 71 to 75 provided on the chassis 60 and receiving portions 31A to 35A provided in the light guide blocks 31 to 35 to mate with the protrusions 71 to 75.

The positioning portions S of the second embodiment are configured inversely as compared to those of the first embodiment. As shown in FIG. 10, the light guide blocks 131 to 135 have protrusions 131A to 135A and the bottom plate 61 of the chassis 60 has receiving portions (holes) 121 to 125 to mate with the protrusions 131A to 135A.

With such a configuration, the central portions in the longitudinal direction of the light guide blocks 131 to 135 can be positioned on the centerline Lc by fitting the protrusions 131A to 135A of the light guide blocks 131 to 135 in the receiving portions 121 to 125 of the chassis 60. Accordingly, the distances Dr and Dl from the LEDs 45 to the end faces E of the light guide blocks 131 to 135 can be made equal on the left and right side. Therefore, the same advantageous effects (reduction of uneven brightness) as in the first embodiment can be achieved.

### <Third embodiment>

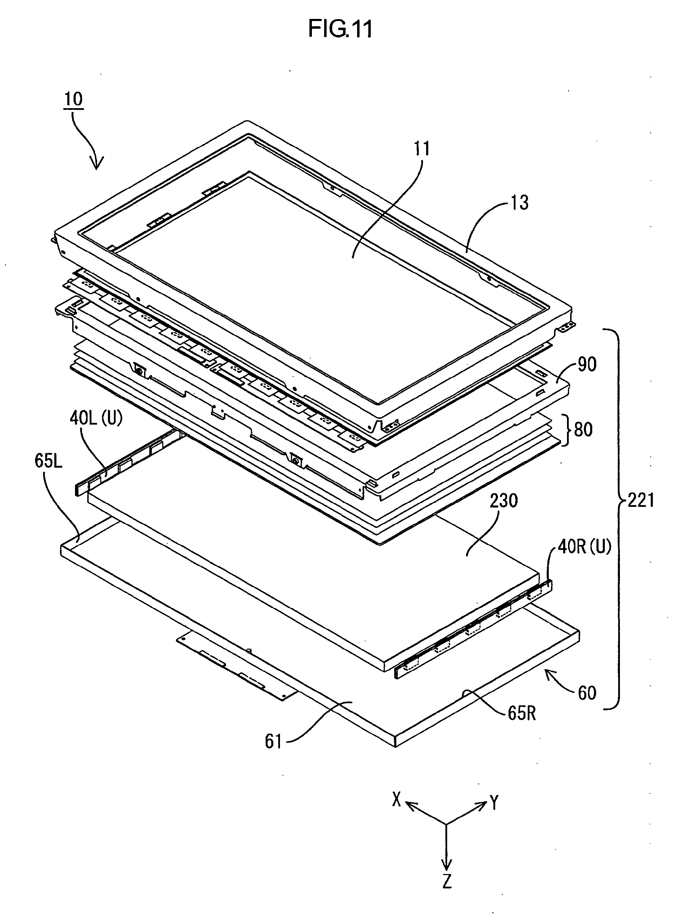

Next, A third embodiment of the present invention will be described with reference to FIGs. 11 to 13. In the first embodiment, a lighting device configured with a light guide plate 30 divided into a plurality of light guide blocks 31 to 35 was illustrated as one example of the lighting device 21. A lighting device 221 of the third embodiment is different from the first embodiment in that a light guide plate 230 is not divided and formed by a single flat plate, and that positioning portions S are provided in a different position, while it is identical to the first embodiment in other features (such as the light source unit U, chassis 60, etc).

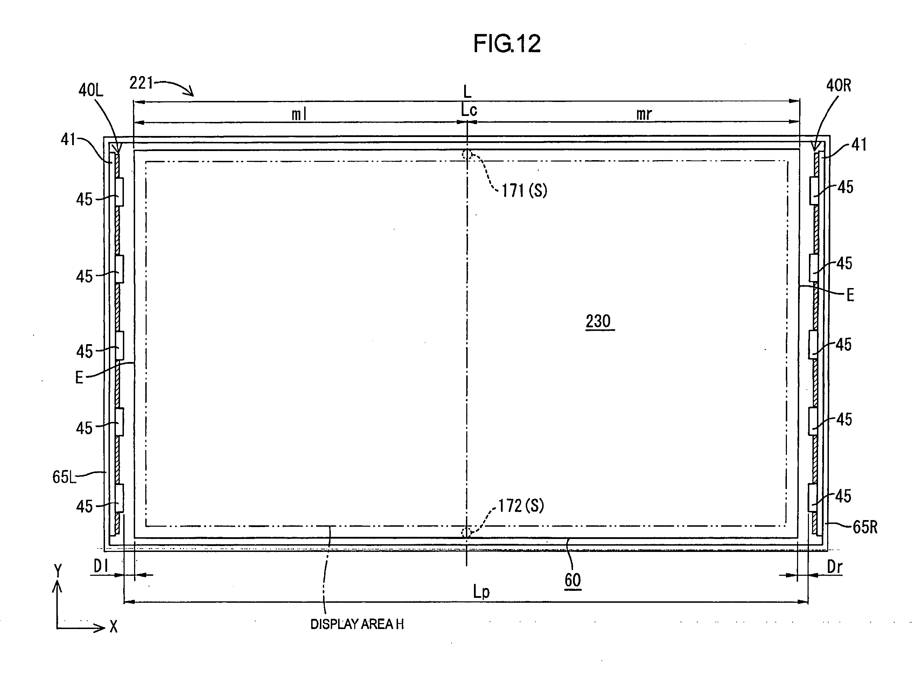

As shown in FIGs. 11 and 12, the light guide plate 230 is made of a highly transparent resin (such as acrylic resin) and has a horizontally long rectangular shape that is substantially the same as that of the liquid crystal panel 11. The entire length L of the light guide plate 230 is set shorter than the face-to-face distance Lp between LEDs, and a reflection sheet 235 is bonded to the backside B.

The light guide plate 230 is disposed at the center of the bottom plate 61 of the chassis 60 with its front side F facing upward. More specifically, as shown in FIG. 12, the light guide plate 230 is disposed between the light source pairs P, with its left and right end faces (light incident surfaces) E facing the left and right LEDs 45. The light guide plate 230 is configured such that its central portion in the longitudinal direction (X direction) is positioned on the centerline Lc by positioning portions S to be described next.

More particularly, two protrusions 171 and 172 are provided along the centerline Lc that corresponds to the midpoints of the light source pairs P on the bottom plate 61 of the chassis 60. More specifically, the protrusions are provided at upper and lower ends in the Y direction on the centerline Lc. These protrusions 171 and 172 are columnar and protrude toward the light guide plate 230. The protrusions 171 and 172 may either be integrally formed on the bottom plate 61 of the chassis 60, or separate parts.

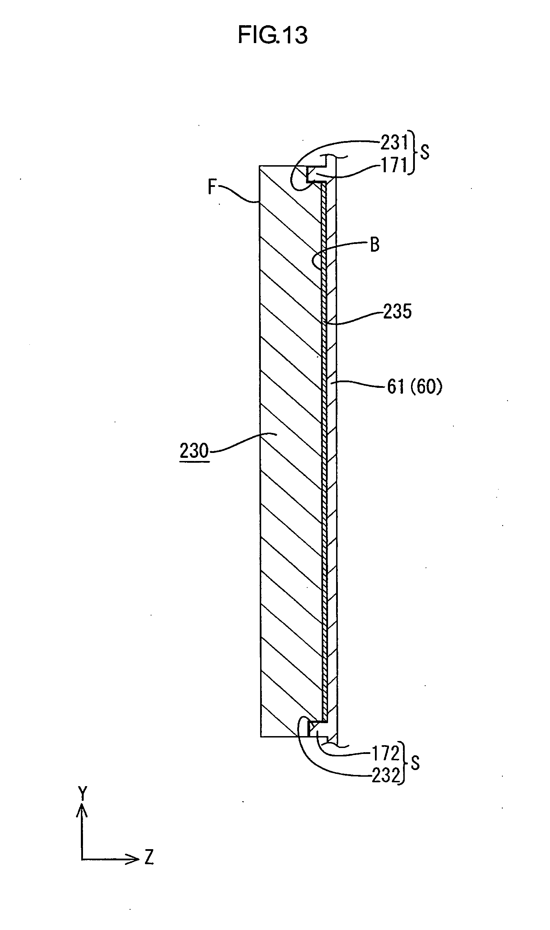

On the other hand, the light guide plate 230 has corresponding receiving portions 231 and 232 in its backside B in the central portion in the longitudinal direction to mate with the protrusions 171 and 172. The receiving portions 231 and 232 are positioned at both ends in the Y direction in the central portion of the light guide plate 230. The receiving portions 231 and 232 are configured as circular depressions corresponding to the shape of the protrusions 171 and 172 such that the protrusions 171 to 172 snugly fit therein (see FIG. 13).

Thus, with the protrusion 171 fitted in the receiving portion 231 and the protrusion 172 in the receiving portion 232, the central portion in the longitudinal direction (X direction) of the light guide plate 230 is positioned on the centerline Lc. Thus, the lengths mr and ml on the left and right about the centerline Lc are equal, as shown in FIG. 12. Accordingly, the distance (gap) Dr from the end faces E on the right side of the light guide plate 230 to the LEDs 45 is equal to the distance (gap) D1 from the end faces E on the left side of the light guide plate 230 to the LEDs 45.

With such a configuration, the same advantageous effects as in the first embodiment can be achieved. Namely, the light guide plate 230 undergoes thermal shrinkage by the heat generated by the LEDs 45 equally on the left and right side about its central portion fixed in position. Thus, the distances Dr and Dl from the LEDs 45 to the end faces E are kept to be equal on the left and right side and remain the same. Therefore, the light guide plate 230 emits light evenly on the left and right side with respect to the centerline Lc when the LEDs 45 are turned on. Consequently, there will be no uneven brightness.

The positioning portions S are preferably located outside a display region (rectangular area indicated by a two dot chain line in FIG. 12) H of the liquid crystal display panel. In this embodiment, since the positioning portions S are assigned each at either end in the Y direction, they are located outside the display region H. In this way, the positioning portions S cannot affect the display performance.

Being located outside the display region H, the positioning portions S also stay away from the LEDs 45. Thus, there is no need to pay attention to the mounting positions of the LED arrays 40R and 40L in relation to the positioning portions S. Therefore, the LED arrays are freely arranged.

A lighting device having a light guide plate 230 formed by a single flat plate cannot perform backlight scanning. Therefore, the light source unit U does not necessarily require point light sources (LEDs), and may instead use linear light sources such as cold cathode tubes.

The positioning portions S illustrated in this embodiment are formed by protrusions 171 and 172 provided on the chassis 60 and receiving portions 231 and 232 provided in the light guide plate 230.

The configuration of the positioning portions S can be inverted, i.e., protrusions may be provided on the light guide plate 230, and receiving portions (holes) may be formed in the bottom plate 61 of the chassis 60 for mating with the protrusions.

### <Other embodiment>

The present invention is not limited to the embodiments described above and illustrated in the drawings. The following embodiments, for example, are also included in the technical scope of the present invention.

(1) In the first to third embodiments, the protrusions (71 to 75, 131A to 135A, 171, and 172) and receiving portions (31A to 35A, 121 to 125, 231, and 232) forming the positioning portions S have a circular shape. However, they can be formed in other shapes, such as quadrate, as long as they (protrusions and receiving portions) can fit to each other.

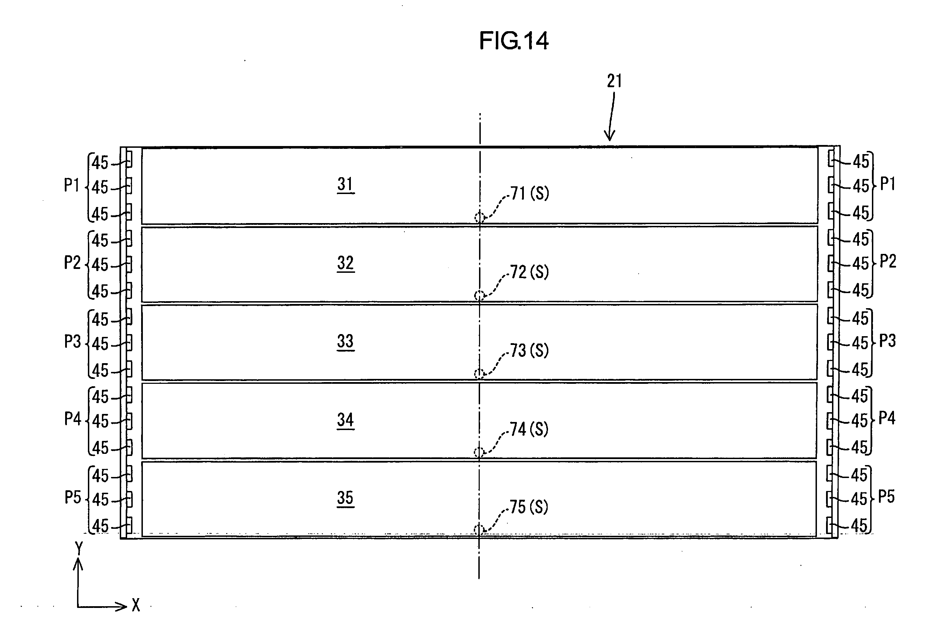

(2) In the first and second embodiments, the light source pairs P are each formed by one pair of LEDs 45. However, the light source pairs P may be formed by two or more pairs of LEDs 45 as shown in FIG. 14 (three pairs in the drawing), as long as they are formed by pairs of LEDs 45.

(3) In the first to third embodiments, LEDs 45 are used as one example of point light sources. However, other light sources can also be used, such as incandescent light bulbs with filaments.

(4) In the first to third embodiments, a reflection sheet (PET foam reflection sheet, multilayer reflection sheet, etc.) is used as one example of a "reflection member". However, instead of using the reflection sheet 42, a white solder resist containing a highly reflective material such as titanic oxide, barium titanate, or polycarbonate may be applied on the surface of the board 41. The thickness of the reflection member can then be made smaller than using a reflection sheet.

(5) The display device (liquid crystal display device) uses TFTs as switching components in the first to third embodiments described above. However, the present technology is applicable also to liquid crystal display devices using other types of switching components (for example TFDs (Thin Film Diodes)). The present technology is applicable not only to color liquid crystal display devices but also monochrome liquid crystal display devices.

(6) The television receiver includes a tuner in various embodiments described above. The present technology is applicable also to display devices without a tuner.

(7) LEDs 45 other than those described in the first embodiment can also be used, such as the one described below, as long as they can emit white light.

The LED 45 may be configured with a light emitting chip 46B emitting blue light, a phosphor layer 48 formed around the light emitting chip 46B and having a light emission peak in a region of green, and a light emitting chip 46R emitting red light. With this configuration, the LED 45 emits white light by mixture of the respective colors (blue, green, and red).

### EXPLANATION OF SYMBOLS

10: Display device
11: Liquid crystal panel
21: Lighting device
30: Light guide plate
31 to 35: Light guide block (One example of "light guide members" of the present invention)
31A to 35A: Receiving portion
40R, 40L: LED array (One example of a "point light source array" of the present invention)
41: Board
42: Reflection sheet (one example of a "reflection member" of the present invention)
45: LED (One example of "point light sources" of the present invention)
60: Chassis (One example of a "housing member" of the present invention)
61: Bottom plate
65R, 65L: Side plate
71 to 75: Protrusion
TV: Television receiver
P1 to P5: Light source pair
S: Positioning portion
U: Light source unit

## Claims

1. A lighting device, comprising:
a light source unit including a plurality sets of light sources arranged along a centerline, each of the light source sets including a set of point light sources disposed so as to be equally distanced from the centerline and face each other;
a plurality of light guide members disposed between the set of light sources, each of the light guide members being provided corresponding to each set of the light sources and having both end surfaces in a longitudinal direction and the end surfaces facing the corresponding point light sources;
a housing member housing the light source unit and the plurality of light guide members; and
a positioning portion configured to position each of the light guide members such that a middle portion of the light guide member in the longitudinal direction corresponds to the centerline.

2. The lighting device according to claim 1, wherein the positioning portion includes a protrusion provided to one of the housing member and the light guide members and a receiving portion provided to another one of the housing member and the light guide members to mate with the protrusion.

3. The lighting device according to one of claims 1 and 2, wherein the positioning portion is provided in the middle portion of the light guide members so as not to overlap the light sources in a plane along a line connecting the corresponding set of light sources.

4. A lighting device, comprising:
a light source unit including sets of light sources arranged along a centerline, each of the light source sets including a set of light sources disposed so as to be equally distanced from the centerline and face each other;
a single light guide plate disposed between the set of light sources and having both end surfaces in a longitudinal direction and the end surfaces facing the light sources;
a housing member housing the light source unit and the light guide plate; and
a positioning portion configured to position the light guide plate such that a middle portion of the light guide plate in the longitudinal direction corresponds to the centerline.

5. The lighting device according to claim 4, wherein the positioning portion includes a protrusion provided to one of the housing member and the light guide plate and a receiving portion provided to another one of the housing member and the light guide plate to mate with the protrusion.

6. The lighting device according to one of claims 4 and 5, wherein the light sources are point light sources.

7. The lighting device according to any one of claims 1, 2, 3, and 6, wherein the light source unit is a point light source array including a board extending parallel to the centerline and the point light sources of the sets of the light sources arrayed thereon in a row.

8. The lighting device according to claim 7, wherein the point light source array is attached to the housing member.

9. The lighting device according to one of claims 7 and 8, further comprising a reflection member provided on the board and configured to reflect light from the point light sources.

10. The lighting device according to claim 9, wherein the reflection member is a PET foam reflection sheet.

11. The lighting device according to claim 9, wherein the reflection member is a multilayer reflection sheet.

12. The lighting device according to claim 9, wherein the reflection member is formed of a light reflecting resist.

13. The lighting device according to any one of claims 1, 2, 3, 6, 7, 8, 9, 10, 11 and 12, wherein the point light sources are white light emitting diodes.

14. The lighting device according to claim 13, wherein each white light emitting diode includes a light emitting chip emitting blue light, and a fluorescent layer formed around the light emitting chip and having a light emission peak in a range of yellow.

15. The lighting device according to claim 13, wherein each white light emitting diode includes a light emitting chip emitting blue light, and a fluorescent layer formed around the light emitting chip and having a light emission peak each in ranges of green and red.

16. The lighting device according to claim 13, wherein each white light emitting diode includes a light emitting chip emitting blue light, a fluorescent layer formed around the light emitting chip and having a light emission peak in a range of green, and a light emitting chip emitting red light.

17. The lighting device according to claim 13, wherein each white light emitting diode includes a light emitting chip emitting blue light, a light emitting chip emitting green light, and a light emitting chip emitting red light.

18. The lighting device according to claim 13, wherein each white light emitting diode includes a light emitting chip emitting UV light, and a fluorescent layer formed around the light emitting chip and having a light emission peak each in regions of blue, green, and red.

19. A display device comprising:
the lighting device according to any one of claims 1 to 18, and
a liquid crystal display panel displaying images using light from the lighting device.

20. A display device comprising:
the lighting device according to any one of claims 4 to 6, and
a liquid crystal display panel displaying images using light from the lighting device, wherein the positioning portion is located in the middle portion of the light guide plate and outside a display region of the liquid crystal display panel.

21. A television receiver comprising the display device according to one of claims 19 and 20.
